# EUROPEAN PATENT SPECIFICATION

(11) **EP 3 181 329 B1**
(45) Date of publication and mention of the grant of the patent: **24.01.2018**
(21) Application number: 15199784.8
(22) Date of filing: 14.12.2015
(51) Int. Cl.: B29C 53/08, B29C 53/84, B29C 53/82

(54) **MACHINE FOR PRODUCING BENT ELEMENTS OF THERMOPLASTIC MATERIAL FOR PIPE COATING**
VORRICHTUNG ZUR HERSTELLUNG VON GEKRÜMMTEN ELEMENTEN AUS THERMOPLASTISCHEM MATERIAL ZUR ROHRBESCHICHTUNG
MACHINE POUR LA PRODUCTION D'ÉLÉMENTS INCURVÉS DE MATÉRIAU THERMOPLASTIQUE POUR REVÊTEMENT DE CONDUITES

(43) Date of publication of application: 21.06.2017
(73) Proprietor: Ecoline S.r.l., 22036 Erba (CO) (IT)
(72) Inventor: TONOLI, Lorenzo, 25015 Desenzano del Garda (BS) (IT)
(74) Representative: Conversano, Gabriele

(56) References cited:
- DE-A1- 3 807 688
- DE-A1-102013 013 762
- JP-A- H11 227 041
- US-A- 4 160 006
- US-A1- 2004 258 789

## Description

The present invention relates to a machine configured for realizing bent elements in thermoplastic material. In particular, and without this being limiting, the machine according to the present invention is particularly optimized for realizing bent elements in high density polyethylene (HDPE) to be used in realizing outer coatings of insulated pipes for applications as remote heating.

### Technical field

Pipes for remote heating are generally realized in insulated steel with polyurethane. Outside the polyurethane layer it is generally provided a protective pipe in high density polyethylene (HPDE). The pipes are assembled by introducing the pipe in steel inside the HPDE coating and by filling next with polyurethane the empty space between the inner pipe and the outer coating.
While realizing these pipes the technologically most crucial step is the realization of the outer coating in high density polyethylene of bent elements. Currently coating of curves is in fact obtained by moving close and welding next more elements obtained by cutting sections of rectilinear pipes with oblique edges. This method is long and increases costs and introduces discontinuities in the structure of the HPDE coating. In fact welding induces thermal stresses in the product, and in particular the welds represent crucial regions from a structural resistance point of view.

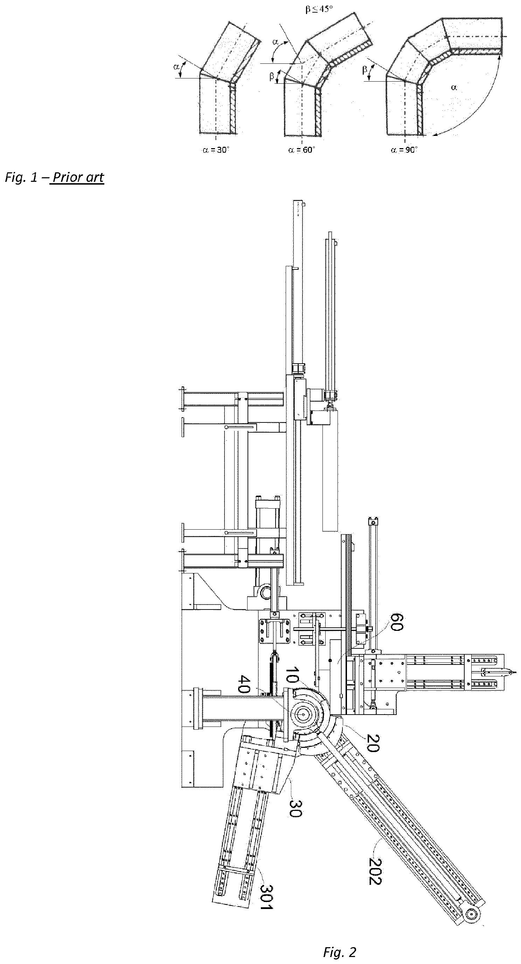

The realization of sections to be welded and the next welding are carried out according to the specifications of the UNI EN 448:2009 norm, which sets the number of rectilinear elements with oblique edges according to the angle of curve. In particular, the norm imposes that between two sectors the angle is not greater than 45°, as it is shown in the scheme in figure 1.

A curve obtained without welding but by bending, starting form a straight pipe in HDPE, would guarantee a uniform quality of coating from a structural point of view, and a reduction of realization times and costs. However the processing methods of the pipes in HPDE currently known do not allow to obtain bent elements efficiently. In the curvature of a tube in HPDE it is in fact needed to consider that the workability of the material depends on temperature, thickness of the material and diameter of the pipe, and it is also needed to consider that during the bending step the pipe is naturally subjected to collapse (at the curve the outer surface of the pipe and the inner surface tend to be squeezed the one on the other one, thus making clearly unusable the pipe).

Some solutions to this problem have been found, particularly in the field of steel pipes processing. An example is described in the document JP 17591194, in which there is described a method for realizing bent pipes in steel coated with plastic which provides to fill the pipe with bulk material, as for example sand or quartz, before processing. In the document JP H0788565 it is described the use of shape memory resin as filling material of the pipe.

Other methods are described in documents DE3807668 and US4160006. Equipments to bend plastic tubes are described in documents DE102013013762, US2004258789 and JPH11227041.

The methods and respective equipment described, and all the other ones known at the state of the art, have some technical drawbacks linked to the fact that they cannot be applied to the realization of pipes in thermo-plastic polymers, that the machines implementing the methods are complex or with difficult maintenance, that they are not simply automatable.

### Object of the invention

Aim of the present invention is therefore to provide a machine according to claim 1, which is able to automatize the production process of bent elements of pipes in thermo-plastic polymer.

### Description of the figures

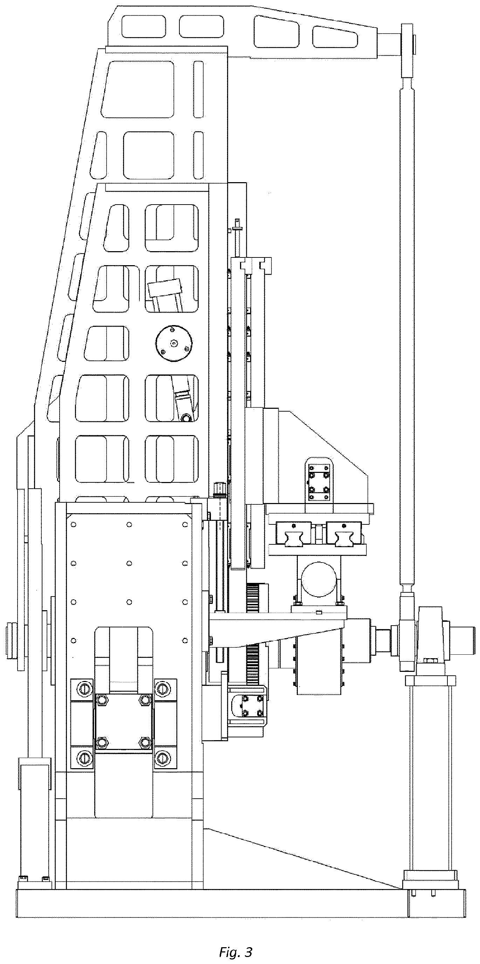

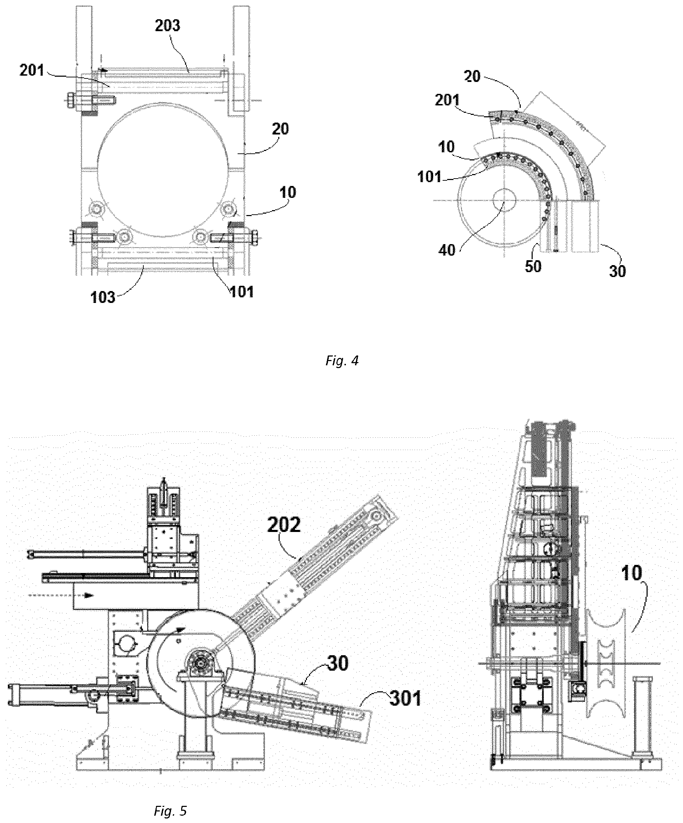

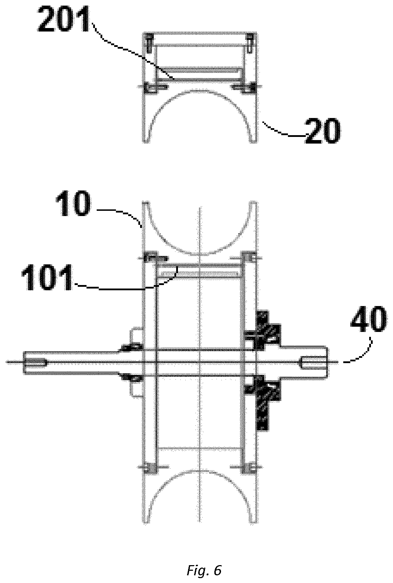

In figure 1 it is shown a realization scheme of bent pipes in HDPE by welding more sections, known at the state of the art; in figure 2 it is shown a side view of the machine according to the present invention; in figure 3 it is shown a frontal view of said machine; in figure 4 it is shown a detail view of the inner matrix and outer matrix; in figure 5 it is shown a section view of the machine according to the present invention; in figure 6 it is shown a section exploded view of the two matrices used for bending the pipes in the present machine.

### Description of the work cycle

In the following there are described first the working cycle and then a preferred embodiment of the machine implementing it. The method for realizing bent elements of pipes in HDPE can be schematized by a subdivision in five steps:

### Step 1

A section of rectilinear pipe of suitable diameter and cut at a suitable length is subjected to preventive heating so that it reaches a uniform temperature and equal to a value which allows its increase in formability. Typical values of formability temperature for pipes in HDPE are between 100 and 140°C.

The heating speed is suitably chosen according to the thickness of the pipe so that it is avoided to reach dangerous temperatures in the portions in direct contact with the heating elements.

### Step 2

Once the section of pipe has reached the processing temperature, a flexible and pressurizable spindle is introduced inside it, whose diameter is slightly lower than the inner diameter of the pipe, when at rest (i.e. not under pressure).

After being introduced inside the rectilinear pipe, the spindle is pressurized so that its volume is increased and so that it exerts a pressure on the pipe, directed from inside outwards.

### Step 3

After the spindle has reached the suitable pressure, the section of pipe and the spindle are introduced in the bending region where two die halves (or matrices), heated as well, by relative motion of the one with respect to the other, impose to the pipe section the correct curvature. In this step the inner pressure in the spindle guarantees that the pipe does not collapse.

### Step 4

Once the forming step is ended there occurs the forced cooling of the bent pipe section, so that it goes out from the temperature range in which the tube can be formed and it is allowed to maintain the form assigned with the bending.
When the pipe has reached again the ambient temperature (about 20°C), the pressure of the flexible spindle is reduced and it is removed from inside the curve of the pipe.

### Step 5

The two matrices are spaced apart and the pipe section, now bent, is extracted, so that it is possible to begin a new processing cycle again.

### Description of the machine

As yet said, the present invention provides also a machine suitable for carrying out the just described method of forming for pipes in thermo-plastic polymers.

In particular the machine comprises an inner matrix (10) and an outer matrix (20), comprising electric resistances (101, 201) therein, configured so that heat is provided to said matrices (10, 20). Conveniently said resistances (101, 201) are introduced inside the matrices and are housed inside holes filled with sand. This allows an easier substitution and maintenance of the resistances, which tend to be oxidized due to heat, with time. Said matrices are further provided with a space (103, 203) in which a thermo-vector fluid can flow, preferably water, to allow the forced cooling of the resistances. The spaces for the cooling fluid (103, 203) are suitably arranged in the inner portion of the inner matrix and in the outer portion of the outer matrix. The machine according to the present invention comprises also means, not shown in the figures, for guaranteeing the thermo-vector fluid flowing inside said spaces and for removing the heat subtracted by the fluid to the matrices.

The inner matrix (10) and the outer one (20) define the radius of curve which is imposed to the pipe. The inner matrix is positioned centrally around an axis (40), and can rotate around the same together with the bending head, as it is clear in the following. The outer matrix (20) slides on a slide (202) so that it can get close to said axis (40) along the direction defined by said slide (202) up to get close to the inner matrix (10) in the position shown in figure 2, in which the two matrices coupled define exactly the shape that the bent pipe would have at the end of processing.

The machine comprises further a bending head, comprising a vice configured to grasp the end section of the pipe. Said vice comprises an inner element (50) and an outer element (30). The outer element slides on a slide (301) of its own so that it can get close to said inner element (50) in the position shown in figure 2.

The assembly of the slide (301), outer element (30) and inner element (50) can rotate around the axis (40) between the position shown in figure 2 and a vertical position in which said inner element (50) and outer ones (30) of said vice are side by side to a track (60) in which the rectilinear section of pipe to be formed is loaded. The loading track (60) is provided with means for pre-heating the section of rectilinear pipe and means for moving the same, configured to make it slide in horizontal direction. As yet said, the inner vice (10) rotates integrally with the bending head.

When the pipe is in the loading track (60), inside the pipe a flexible and pressurizable spindle is introduced to avoid that the pipe collapses during bending. The spindle has to resist the working pressure (for pipes in HDPE preferably between 5 and 10 bar) and the forming temperature of the pipe without being subjected to a degradation of its own features of resistance. Suitably for the forming of pipes in HDPE it can be used a spindle in polyurethane plastic material. The machine comprises further means, not shown in figure, for pressurization of the spindle.

After describing the main elements of the machine, it is now possible to describe its working cycle:
1) in the track (60) a rectilinear pipe section is pre-heated, inside which the spindle is introduced which is then pressurized;
2) the bending head (50, 30), by rotating around the axis (40) goes in vertical position and grasps the head of the pipe section by moving the outer element (30) on the slide (301), which gets close radially to the inner element of the vice;
3) the bending head (50, 30) rotates then around the axis (40), and brings together the pipe section, which in this step is yet rectilinear, of an angle equal to the angle which has to be covered by the curve at the end of working;
4) the outer matrix (20) slides on the slide (202) and gets close radially to the inner matrix (10), bending with its own movement the pipe section which takes the curvilinear shape;
5) the pipe section is heated for a preset time interval by means of the resistances (101, 201) contained inside the inner vice (10) and the outer one (20), and it is cooled in the following;
6) the outer matrix and then the outer element of the vice open sequentially, and the finished piece is discharged.

## Claims

1. Machine for realizing bent elements in thermo-plastic material to be used for pipe coating, comprising:
- an inner matrix (10) and an outer matrix (20), of such shape that they define the radius of curve imposed to the pipe, said outer matrix being slidingly constrained to a slide (202) so that it can get close, by moving along the direction defined by said slide (202), to the inner matrix (10),
- a bending head, comprising a clamp provided with an inner element (50) and an outer element (30), said outer element being sliding on a slide (301) so that it can get close to said inner element (50) and grasp the end section of the pipe to be formed;
- a track (60) for loading the rectilinear pipe to be formed, provided with means for moving the same, configured to make it slide in horizontal direction towards said bending head,
**characterized in that** said track (60) for loading the rectilinear pipe to be formed is provided with means for pre-heating said pipe,
**in that** said bending head and said inner matrix can move integrally between a first position in which said bending head can grasp the end section of said pipe loaded in said track (60), and a second position in which said outer matrix (20), by getting close to said inner matrix (10) in the direction defined by said slide, bends said pipe thus giving a bent shape to it,
and **in that**
said machine further comprises a flexible and pressurizzable spindle, configured to be introduced inside said pipe section to be formed and to exert on the same, during the forming step, a pressure directed from inside outwards useful to make the pipe not collapse during forming.

2. Machine according to claim 1, **characterized in that** said spindle is in polyurethane plastic material and **in that** said machine further comprises means for pressurization of spindle.

3. Machine according to claim 1 or 2 **characterized**
**in that** said inner (10) and outer matrices (20) comprise inside electric resistances (101, 201) configured so that heat is provided to said matrices (10, 20).

4. Machine according to claim 3 **characterized in that** said resistances (101, 201) are housed in holes filled with sand.

5. Machine according to any one of claims 1 to 4, **characterized in that** said inner (10) and outer matrices (20) comprise further a space (103, 203) in which a thermo-vector fluid can flow, preferably water, to allow the forced cooling of the resistances.

## Patentansprüche

1. Maschine zum Herstellen gebogener Elemente aus thermoplastischem Material zur Verwendung für die Beschichtung von Rohren, umfassend:
- eine innere Matrix (10) und eine äußere Matrix (20) mit einer solchen Gestalt, dass sie den Krümmungsradius definieren, der auf die Röhre ausgeübt wird, wobei die äußere Matrix gleitend mit einem Schieber (202) derart verdrängt wird, dass er sich durch eine Bewegung entlang der durch den Schieber (202) definierten Richtung der inneren Matrix (10) nähern kann,
- einen Biegekopf mit einer Klemmbacke, die mit einem Innenelement (50) und einem Außenelement (30) versehen ist, wobei das genannte Außenelement derart auf einem Schieber (301) verschiebbar ist, dass es sich dem Innenelement (50) annähern und den Endbereich der zu bildenden Röhre erfassen kann;
- eine Schiene (60) zum Laden des zu formenden geradlinigen Rohrs, die mit Mitteln zum Bewegen desselben versehen ist, und die derart konfiguriert sind, dass es in horizontaler Richtung zum genannten Biegekopf gleiten kann,
**dadurch gekennzeichnet, dass**
die genannte Schiene (60) zum Laden des zu formenden geradlinigen Rohrs mit Mitteln zum Vorheizen des genannten Rohres versehen ist,
und dass
der genannte Biegekopf und die genannte innere Matrix sich integral zwischen einer ersten Position, in der der genannte Biegekopf den Endbereich des genannten in der Schiene (60) geladenen Rohrs greifen kann, und einer zweiten Position, in der die äußere Matrix (20) angeordnet ist, bewegt werden kann; mit einer Annäherung an die innere Matrix (10) in der Richtung, die durch den genannten Schieber definiert ist, wobei das genannte Rohr verbogen wird, wodurch es eine gebogene Gestalt erhält,
und dass
die genannte Maschine ferner einen flexiblen und mit Druck betätigbaren Schaft umfasst, der derart konfiguriert ist, dass er in den zu bildenden Rohrbereich eingeführt werden kann und auf diesen während des Formungsvorgangs einen von innen nach außen gerichteten Druck ausüben kann, um das Rohr beim Umformen nicht kollabiert.

2. Maschine nach Anspruch 1, **dadurch gekennzeichnet, dass**
der genannte Schaf aus einem Polyurethan-Kunststoffmaterial gebildet ist und dass die genannte Maschine ferner Mittel zum Unterdrucksetzen des Schafts aufweist.

3. Maschine nach Anspruch 1 oder 2, **dadurch gekennzeichnet, dass** die genannten innere (10) und äußere Matrix (20) interne elektrische Widerstände (101, 201) umfassen, die derart ausgelegt sind, dass Wärme den genannten Matrizen (10, 20) geliefert wird.

4. Maschine nach Anspruch 3, **dadurch gekennzeichnet, dass**
die genannten Widerstände (101, 102) in mit Sand gefüllten Löchern untergebracht sind.

5. Maschine nach einem der Ansprüche 1 bis 4, **dadurch gekennzeichnet, dass** die innere (10) und die äußere (20) Matrize ferner einen Raum (103, 203) umfassen, in den der Fluss eines Thermovektor-Fluides fließen kann, vorzugsweise von Wasser, um eine erzwungene Kühlung der Widerstände zu ermöglichen.

## Revendications

1. Machine de production d'éléments courbés en matière thermoplastique à utiliser pour le revêtement de tubes, comprenant:
- une matrice interne (10) et une matrice externe (20), de forme telle qu'elles définissent le rayon de courbure imposé au tube, ladite matrice externe étant contrainte de manière coulissante à un curseur (202) pour qu'il puisse s'approcher, par un mouvement selon la direction définie par ledit curseur (202), à la matrice interne (10),
- une tête de cintrage comprenant une mâchoire pourvue d'un élément interne (50) et d'un élément externe (30), ledit élément externe pouvant coulisser sur un curseur (301) de manière à pouvoir s'approcher dudit élément interne (50) et saisir la partie terminale du tube à former;
- un rail (60) de chargement du tube rectiligne à former, pourvu de moyens de déplacement de celui-ci, configuré pour le faire coulisser dans une direction horizontale vers ladite tête de cintrage,
**caractérisé par le fait que**
ledit rail (60) pour charger le tube rectiligne à former est pourvu de moyens pour préchauffer ledit tube, du fait que
ladite tête de cintrage et ladite matrice interne peuvent être déplacées intégralement entre une première position dans laquelle ladite tête de cintrage peut saisir la partie terminale dudit tube chargé dans ledit rail (60), et une seconde position dans laquelle ladite matrice externe (20) en s'approchant de ladite matrice interne (10) dans la direction définie par ledit curseur, courbe ledit tube en lui donnant ainsi une forme courbée,
et que
ladite machine comprend en outre un arbre flexible et mis en pression, configuré pour être introduit à l'intérieur de ladite partie de tube à former et pour appliquer sur ceux-ci, pendant l'opération de formage, une pression dirigée de l'intérieur vers l'extérieur, utile afin de ne pas écraser le tube lors du formage.

2. Machine selon la revendication 1, **caractérisée en ce que** ledit arbre est formé d'une matière plastique de polyuréthane et que ladite machine comporte en outre des moyens de mise en pression de l'arbre.

3. Machine selon la revendication 1 ou 2 , **caractérisée en ce que** lesdites matrices interne (10) et externe (20) comprennent des résistances électriques internes (101, 201) configurées pour fournir de la chaleur pour lesdites matrices (10, 20) .

4. Machine selon la revendication 3 **caractérisée en ce que** lesdites résistances (101, 102) sont logées dans des trous remplis de sable.

5. Machine selon l'une quelconque des revendications 1 à 4, **caractérisée en ce que** lesdites matrices interne (10) et externe (20) comprennent en outre un espace (103, 203) dans lequel le flux d'un fluide thermo-vecteur peut circuler, de préférence de l'eau, afin de permettre le refroidissement forcé des résistances.
